# EUROPEAN PATENT SPECIFICATION

(11) **EP 3 765 336 B1**
(45) Date of publication and mention of the grant of the patent: **25.09.2024**
(21) Application number: 19714001.5
(22) Date of filing: 14.03.2019
(51) Int. Cl.: B60Q 1/076, B60Q 1/115, B60Q 1/12, F21W 107/17

(54) **A LIGHTING SYSTEM**
EINE BELEUCHTUNGSANLAGE
UN SYSTÈME D'ÉCLAIRAGE

(30) Priority: 15.03.2018 US 201862643354 P; 02.11.2018 US 201816179407
(43) Date of publication of application: 20.01.2021
(73) Proprietor: Allight International AB, 23741 Bjärred (SE)
(72) Inventor: HASHIMOTO, Peymon, Van Nuys, CA 91401 (US)
(74) Representative: Invent Horizon IP
(86) International application number: PCT/US2019/022285
(87) International publication number: WO 2019/178365

(56) References cited:
- EP-A1- 2 489 549
- EP-A1- 3 141 425
- IT-A1- MI20 131 056
- JP-A- 2017 100 500
- JP-A- H09 277 974
- TW-U- M 492 260
- US-B2- 6 637 914
- HUBERT SCHUHLEITNER ET AL: "Adaptiver Xenon-Hauptscheinwerfer f?r Motorr?der", ATZ, 1 October 2011 (2011-10-01), pages 758 - 763, XP055031451, Retrieved from the Internet <URL:-> [retrieved on 20120702]

## Description

### Technical Field

The invention relates to a lighting system for a leaning vehicle, such as a motorcycle.

### Background

Various lighting systems for vehicles that lean, bank or otherwise undergo significant changes in driving position are known. Such vehicles may include motorcycles, scooters, mopeds, etc. One of the problems commonly associated with driving e.g. a motorcycle is limited use when the light is needed to illuminate the road. For example, as a rider turns and thereby tilts the motorcycle, the light no longer lights the ideal path for the rider, which has negative impact on the safety of driving the motorcycle. Accordingly, although great strides have been made in the area of motorcycle lighting systems, many shortcomings remain. Problems with existing solutions for adapting the light as the motorcycle's position varies in relation to the road include complex and expensive solutions, which are also cumbersome to fit or retrofit to headlight assemblies of modern motorcycles which often are compact and have a great design variability. TWM 492260U discloses a LED lamp body connected to a drive motor. The motor has a headlight mount with extensions forming a bracket typical for a frame mount of a vehicle. US6637914 discloses a headlamp having a reflector unit in a lamp body. The reflector unit includes a light source bulb and a driving mechanism. The driving mechanism supports the light source bulb in such that it is rotatable about an optical axis. The reflector is not rotatable. When the vehicle body rolls the bulb driving mechanism rotates the light source bulb in the direction opposite to the rolling direction. In JP2017100500 both the light source and the reflector are rotatable around the motor's rotation axis, but the this axis is perpendicular to the optical axis of the light source.

### Summary

It is an object of the invention to at least partly overcome one or more limitations of the prior art. In particular, it is an object to provide an improved lighting system for leaning vehicles, such as motorcycles, in particular allowing for a facilitated fit or retrofit to a wider range of headlight assemblies, while being less complex and costly to manufacture. According to the invention, this is achieved by the lighting system described in claim 1, by the method of lighting control described in claim 16 and by the method of providing lighting for a leaning vehicle described in claim 17.

Further examples of the invention are defined in the dependent claims.

Having a pivot frame configured to be fixed to a light emitting and to a light reflective device, a mount configured to be fixed to a light fitting of a leaning vehicle, a motor attached to the pivot frame and the mount to rotate the pivot frame relative to the mount in response to sensor data of a leaning angle (v) of the leaning vehicle provides a compact and less complex light system that facilitates fit or retrofit to a wide range of headlight assemblies for vehicles such as motorcycles, scooters, mopeds, etc. ATV's, watercrafts, and three-wheelers.

Still other objectives, features, aspects and advantages of the invention will appear from the following detailed description as well as from the drawings.

### Drawings

Embodiments of the invention will now be described, by way of example, with reference to the accompanying schematic drawings.
Fig. 1 is a schematic illustration, in a cross-sectional side view, of a lighting system according to an embodiment of the invention;
Figs. 2a-b are schematic illustrations, in cross-sectional side views, of a lighting system according to embodiments of the invention;
Figs. 3a-b are schematic illustrations, in cross-sectional side views, of a lighting system, fig. 3a disclosing an embodiment of the invention; while the example disclosed in fig. 3b does not fall under the scope of the invention;
Figs. 4a-b are schematic illustrations, in cross-sectional side views, of a lighting system that does not fall under the scope of the invention;
Figs. 5a-b are schematic illustrations, in cross-sectional side views, of a lighting system, fig. 5b disclosing an embodiment of the invention; while the example disclosed in fig. 5a does not fall under the scope of the invention;
Fig. 6 is a schematic diagram of a lighting system according to an embodiment of the invention;
Fig. 7 is a schematic illustration of a lighting system according to an embodiment of the invention mounted to a motorcycle;
Figs. 8a-b are schematic illustrations, in perspective views, of a lighting system according to embodiments of the invention;
Figs. 9 is a schematic illustration, in a perspective view, of a lighting system according to an embodiment of the invention;
Fig. 10a is a flowchart of a method of lighting control in a lighting system according to an embodiment of the invention; and
Fig. 10b is a flowchart of a method of lighting control in a lighting system according to an embodiment of the invention.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

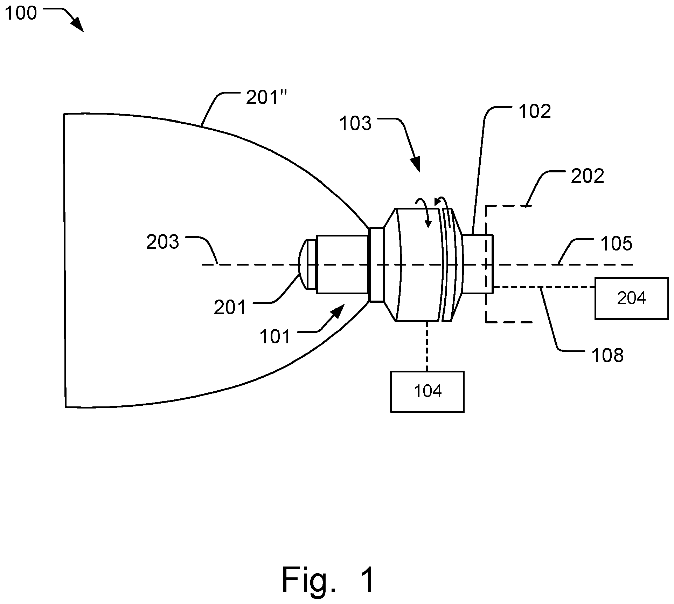

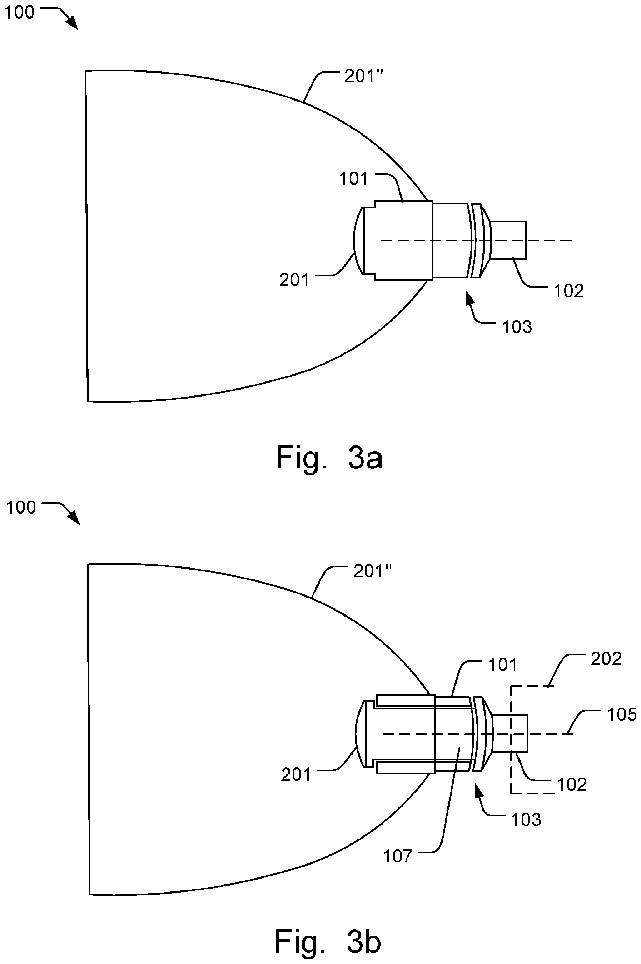

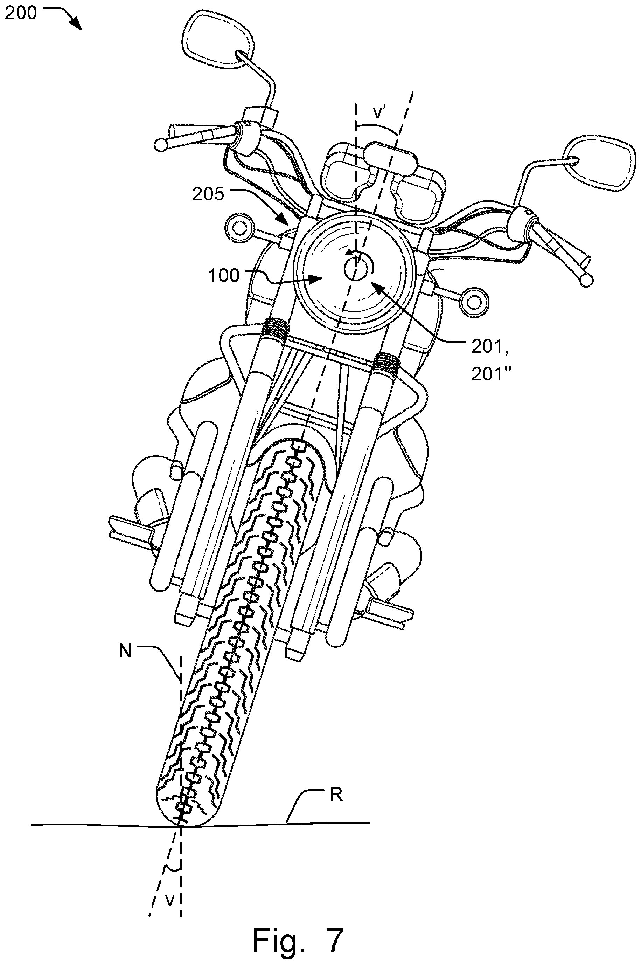

Fig. 1 is a schematic illustration of a lighting system 100 for a leaning vehicle 200, such as a motorcycle, exemplified in Fig. 7. The lighting system 100 comprises a pivot frame 101 configured to be fixed to a light emitting and to a light reflective device 201, 201', 201", as described further in relation to Figs. 1, 2a, 2b, 3a and 5b In the example of Fig. 1, the pivot frame 101 is fixed to the light reflective device 201". The light emitting device 201 is also attached to the pivot frame 101 in Fig. 1, while Fig. 3b shows an example that does not fall under the scope of the invention where the pivot frame 101 is attached to the light reflective device 201", and not the light emitting device 201. In all examples as schematically illustrated in Figs. 1, 2a, 2b, 3a, 5b, 7-9, it is conceivable that the light reflective device 201" and/or the light emitting device 201, 201', is removably attachable to the pivot frame 101. Such removable attachment may be provided by threads, screws, bolts, clamps, connectors, pins, or other engagement mechanisms. Thus, the light reflective device 201" and the light emitting device 201, 201', are fixed to the pivot frame 101 by attachment thereto. The light reflecting device 201" may comprise different types and combinations of reflecting surfaces for directing the light from the light emitting device 201, 201, according to a desired pattern. The light reflecting device 201" may also comprise lens or projection elements (not shown) for projecting the light from the light emitting device 201, 201', according to a desired illumination pattern on the road surface (R). The light reflecting device 201" is only schematically illustrated in Figs. 1, 2a, 2b, 3a, 5b and it should be understood that the light reflecting device 201" may have various shapes and configurations while being fixed to the pivot frame 101. The lighting system 100 provides for the advantageous benefits as described in the present disclosure for any such variations of the light reflecting device 201". The light emitting device 201, 201', may comprise a luminescent light source such as a LED or laser light source, or a gas-discharge lamp, such as xenon lamp, or an electrical gas-discharge lamp, such as a high-intensity discharge lamp (HID lamp), or any combination thereof. The lighting system 100 provides for the advantageous benefits as described in the present invention for any such variations of the light emitting device 201.

The lighting system 100 comprises a mount 102 configured to be fixed to a light fitting 202 of a leaning vehicle, such as a motorcycle 200. The example of Fig. 1 shows only a schematic light fitting or connector 202. The mount 102 may be configured to engage with such fitting 202 e.g. by a connecting element comprising threads, screws, bolts, clamps, connectors, pins, or other engagement mechanisms, to provide a fixed position of the mount 102 relative the leaning vehicle 200. The mount 102 may be configured for removably attaching the lighting system 100 to the light fitting 202 of a headlight assembly 205 of the leaning vehicle 200, e.g. by any of the mentioned engagement mechanisms. The mount 101 may comprise a threaded rod in some examples for a facilitated mounting, by screwing the threaded rod into a corresponding female threaded opening of the fitting 202. It is conceivable that the lighting system 100 can be mounted in a wide range of headlight assemblies 205 and also be utilized as any other light source on the vehicle 200 for improving driver safety, such as an auxiliary light source mounted to the vehicle 200. Any plurality of the lighting system 100 as described in the present invention may be combined in a plurality of light sources, such as a plurality of headlight assemblies and/or a plurality of auxiliary lights.

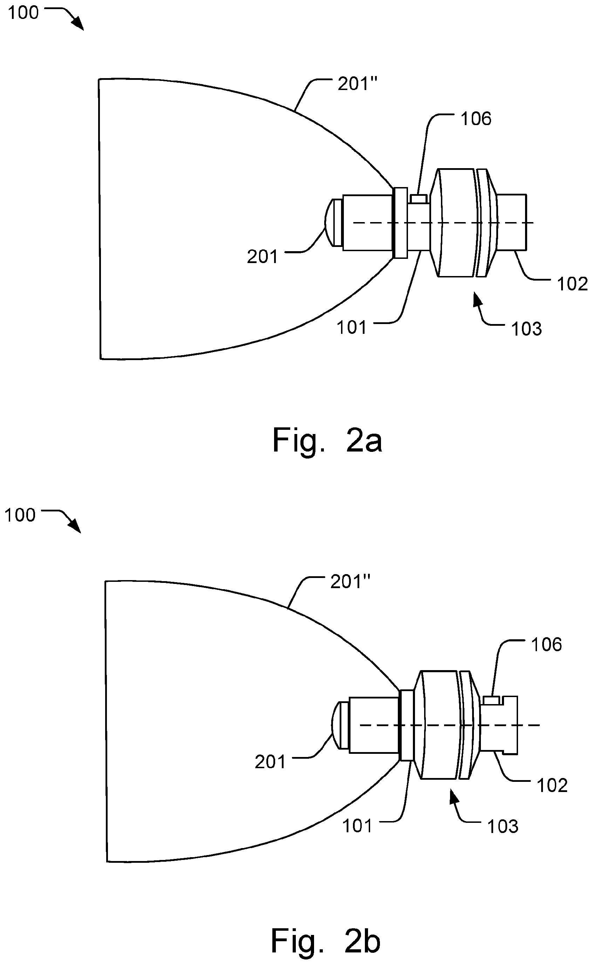

The lighting system 100 comprises a motor 103 attached to the pivot frame 101 and the mount 102. The motor 103 is configured to provide rotational movement of the pivot frame 101 relative to the mount 102, as schematically indicated with opposing arrows at the motor 103 in Fig. 1. The light emitting device 201 and the light reflective device 201" are thus able to rotate relative to the mount 102. The lighting system 100 comprises a controller 104 in electrical communication with the motor 103. The controller 104 is configured to receive sensor data of a leaning angle (v) of the leaning vehicle 200, such as indicated for the leaning motorcycle in Fig. 7. The sensor data may be provided by motion sensor components already connected to the electrical system 204 of the motorcycle, and/or the sensor data may be provided by a motion sensor 106 connected to the lighting system 100 as described further below with reference to e.g. Figs. 2a-b. It is conceivable that the sensor data is communicated to the controller 104 through a wired connection or via wireless data transmission over various electromagnetic communication frequencies. The controller 104 may be integrated with the motor 103 or connected to the mount 102, or the pivot frame 101. Alternatively, the controller 104 may be attached to any component of the leaning vehicle 200 and configured to communicate with the motor 103 through a wired or wireless connection. In the latter case, the motor 103 may comprise a receiver (not shown) to receive control instructions from the controller 104. The controller 104 is thus configured to control the motor 103 to rotate the pivot frame 101 to a desired angle relative to the mount 102 based on the leaning angle (v). The controller 104 may be configured to rotate the pivot frame 101 angle relative to the mount 102 so that a defined level position of the pivot frame 101 relative the road surface (R) is maintained. Hence, if the level position is defined at v = 0 degrees, relative a normal (N) of the surface (R) in the example of Fig. 7, the controller 104 may be configured to rotate the pivot frame 101 relative the mount 102 with an angle (v') that cancels out any deviation from such level position, e.g. by rotating the pivot frame 101 with an angle v' = -v if the motorcycle 200 leans with an angle v from the level position. The mount 102 is assumed to have a fixed relationship to the motorcycle 200. It is conceivable however that the controlled 104 may be configured to apply any off-set value (W) to the angle (v') by which the pivot frame 101 is rotated relative the mount 102 for any given angle (v) by which the motorcycle 200 leans; e.g. v' = -v ± W. For example, it may be desired to overcompensate or undercompensate the leaning motion of the motorcycle 200 in some applications or situations. It is further conceivable that such compensation may be a linear or non-linear function (f) of the leaning angle (v), i.e. v' = f(v), where the function (f) may in addition take into account any motion characteristics (m) of the leaning vehicle 200, such as speed and acceleration in three dimensions; v' = f(v,m). The controller 104 may thus be configured to determine the desired angle (v') as a function of the leaning angle (v) and motion characteristics of the leaning vehicle 200. It is also conceivable that the controller 104 is configured to determine the angle v' based on other sensor data such as environmental or ambient data, e.g. ambient light conditions when driving the vehicle 200, to provide for further optimization of the illumination of the road to the driving conditions.

Hence, since the light emitting device 201 and the light reflective device 201" are attached to the pivot frame 101 when the lighting system 100 is mounted to the motorcycle 200, and rotate along with the rotation angle (v') of the pivot frame 101, the light pattern and characteristics may be optimized for the driver regardless of the leaning angle (v) of the vehicle 200. Having a pivot frame 101 configured to be fixed to the light emitting and to the light reflective devices 201, 201" a mount 102 configured to be fixed to a light fitting 202 of a leaning vehicle 200, and a motor 103 attached to the pivot frame 101 and the mount 102 to rotate the pivot frame 101 relative to the mount 102 in response to sensor data of a leaning angle (v) of the leaning vehicle 200 provides for a particularly compact light system 100 with few components, which facilitates fit or retrofit to a wide range of headlight assemblies. As described, the lighting system 100 provides for a highly adaptable light which allows for taking into account a wide range of driving- and vehicle characteristics.

The pivot frame 101 is configured to be fixed to a light emitting device 201 configured to emit light along an optical axis 203. The pivot frame 101 is rotatable around a pivot axis 105 relative to the mount 102. The embodiment of Fig. 1 illustrates an optical axis 203 of the light emitting device 201 and a pivot axis 105 of the pivot frame 101. The pivot axis 105 is parallel with the optical axis 203. This provides for an effective manipulation of the light pattern over a wide range of driving conditions, while fit or retrofit to a wide range of headlight assemblies may be facilitated.

The optical axis 203 is concentric with the pivot axis 105, as exemplified in Fig. 1. This provides for a compact lighting system 100 with a minimized footprint in the vertical direction, perpendicular to the pivot axis 105. This may be particularly advantageous in small headlight assemblies where mounting space is limited.

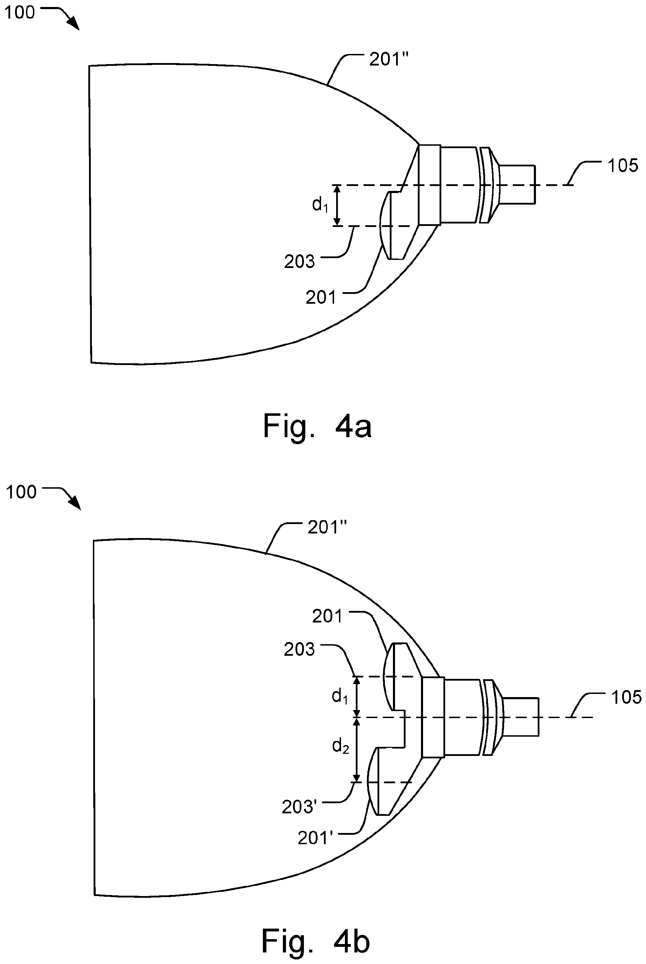

In another example that does not fall under the scope of the invention, the optical axis 203, 203', is off-set from the pivot axis 105 with an off-set distance (d₁, d₂) in a direction perpendicular to the pivot axis 105, as seen in Figs. 4a-b. Providing for an off-set optical axis 203 as exemplified in Fig. 4a allows for utilizing the adaptable lighting of the lighting system 100 as explained above for a wider range of optical configurations and headlight assemblies. This also facilitates utilizing a plurality of light emitting devices 201, 201', for such adaptive lighting. This is exemplified in Fig. 4b where two light emitting devices 201, 201', and associated optical axes 203, 203', are arranged with respective off-set distances (d₁, d₂) from the pivot axis 105. It is conceivable that any plurality of light emitting devices 201, 201', may be utilized in this manner.

Although the aforementioned examples show the optical axis 203, 203', arranged in parallel with the pivot axis 105, it is conceivable that in some applications it may be advantageous to arrange the optical 203, 203', with an angle from the pivot axis 105.

The lighting system 100 comprises a sensor 106 configured to detect the aforementioned leaning angle (v) of the leaning vehicle 200 and sends the sensor data to the controller 104. The sensor 106 may be integrated with the lighting system 100 which provides for a facilitated retrofitting to existing headlight assemblies as well as a more compact and robust lighting system 100. The sensor 106 may be integrated with the lighting system 100 by being attached to the pivot frame 101 or the mount 102 as shown in Figs. 2a-b, or to the motor 103 itself. The sensor 106 being integrated with the lighting system 100 may also be construed as the controller 104 being in communication with a dedicated sensor 106 providing the aforementioned sensor data to the controller 104, hence facilitating replacement of standard non-adaptive lights with the lighting system 100.

The sensor 106 may be attached to the pivot frame 101, as schematically shown in the example of Fig. 2a. This provides for a compact lighting system 100 and facilitated retrofit as elucidated above. Having the sensor 106 attached to the pivot frame 101 may be particularly advantageous in installations where the available space around the mount 102 is limited. The sensor 106 may thus rotate along with the pivot frame 101. This may provide for improved sensor performance 106 in some situations, since the sensor 106 may be kept at the defined level. It is further conceivable that the sensor 106 may comprise multiple sensors such as an ambient sensor, or a sensor for speed and acceleration detection, in addition to detection of leaning angle (v). The performance of such sensor may in some applications be improved if the sensor is kept level during driving the vehicle 200. The sensor 106 in communication with the controller 104 may thus be configured to compare its current leaning angle with a desired angle, e.g. a horizontal level position, and send instructions to the motor 103 to rotate the pivot frame 101 and the sensor 106 attached thereto, so that the sensor 106 assumes a position corresponding to the desired angle.

Alternatively, the sensor 106 may be attached to the mount 102, as schematically shown in Fig. 2b. The sensor 106 may also be integrated with the motor 103, either to the portion of the motor rotating with the pivot frame 101, or to the portion of the motor rotating with the mount 102.

The mount 102 may comprise a connector 107 configured for attachment to the light emitting device 201. An example which does not fall under the scope of the invention is illustrated in Fig. 3b. It shows that the connector 107 extends from the light emitting device 201 to the portion of the mount 102 engaging with the fitting 202 of the vehicle 200. Thus, in this example, the light emitting device 201 has a fixed position in relation to the vehicle 200. The pivot frame 101 is configured to be fixed to the light reflective device 201". The light reflective device 201" is thus rotatable relative the light emitting device 201 by the motor 103. This may provide for a facilitated integration with some headlight assemblies when fitting or retrofitting the lighting system 100 thereto. A stationary light emitting device 201 may for example facilitate the electrical connection to the electrical system of the vehicle 200.

The connector 107 may be concentrically aligned with the pivot axis 105 of the pivot frame 101, as exemplified in Fig. 3b. This provides for a compact lighting system 100 as described above.

The lighting system 100 may comprise a secondary light emitting device 201' fixed to the pivot frame 101, as shown in the example of fig. 4b which does not fall under the scope of the invention. It is to be understood that any plurality of light emitting devices 201, 201', may be fixed to the pivot frame 101 as described above.

The lighting system 100 comprises the aforementioned light reflective device 201". The light reflective device 201" is attached to the pivot frame 101. The light reflective device 201" may be integrated with the pivot frame 101, which may provide for a particularly robust and compact lighting system 100. The pivot frame 101 is configured to be fixed to the light emitting device 201. The light emitting device 201 and the light reflective device 201" are thus rotatable relative the mount 102 by the motor 103.

The lighting system 100 comprises an electrical connection interface 108 configured to connect to an electrical system 204 of the leaning vehicle 200 for communication between the electrical system 204 and the controller 104 to receive the aforementioned sensor data, as described above and schematically illustrated in Fig. 1. The sensor data may thus be received via sensors already connected to the electrical system 204 of the vehicle 200.

The electrical connection interface 108 may also be configured to allow for communication between the electrical system 204 and the light emitting device 201, 201', i.e. to control the power to the light emitting device 201, 201'. In one example, the controller 104 may be configured to control the power output to the light emitting device 201, 201', e.g. to vary the amount of light in dependence on the sensor data. It may be desirable for example to increase the light output momentarily as the motorcycle leans into a curve in the road. The controller may thus be configured to control a power output to the light emitting device 201, 201', based on the leaning angle (v).

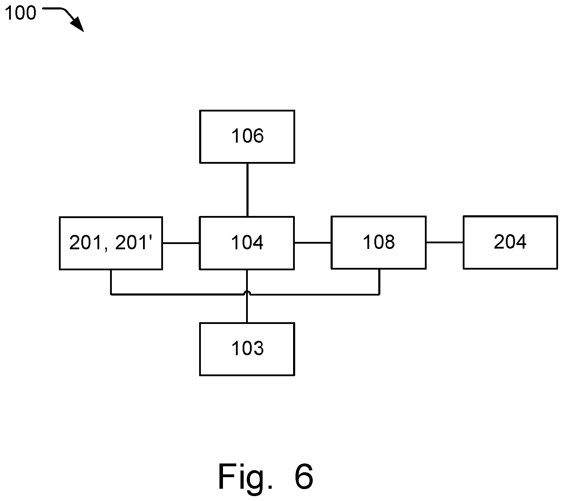

Fig. 6 is a schematic diagram of a lighting system 100 according to an example. The sensor 106 and the motor 104 are in communication with the controller 104. An electrical connection interface 108 may connect to an electrical system 204 of the leaning vehicle 200, to allow for electrical communication with the controller 104 and/or the light emitting device 201, 201'. The controller 104 may also communicate with the light emitting device 201, 201', as mentioned above.

The motor 103 is be concentrically arranged with respect to the pivot frame 101. A width (w₁) of the motor 103, in a direction perpendicular to the pivot axis 105 of the pivot frame 101 may be at the most 50% wider than a width (w₂) of the pivot frame 101 and/or a light emitting device 201 connected to the pivot frame 101. This provides for a compact lighting system 100 for facilitated integration in a wide range of different headlight assemblies 205.

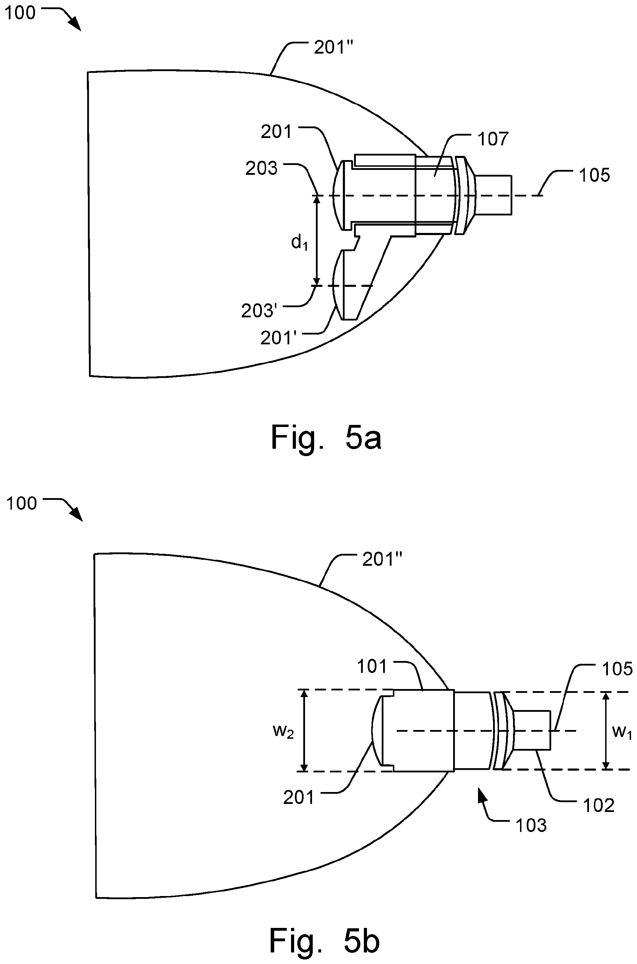

The width (w₁) of the motor 103, in a direction perpendicular to a pivot axis 105 of the pivot frame 101, may correspond essentially to, or be less than, the width (w₂) of the pivot frame 101 and/or a light emitting device 201 connected to the pivot frame 101. The example in Fig. 5b shows the width (w₁) of the motor 103 corresponding essentially to the width (w₂) of the pivot frame 101 and/or a light emitting device 201. This provides for a particularly facilitated integration in various headlight assemblies 205. The lighting system 100 may thus readily replace standard, non-adaptive lighting by removal of the standard light source in the headlight assembly 205 and connecting the mount 102 of the lighting system 100 in the standard light source fitting 202. The width of the motor 103 may in one example be at the most 30 mm for such facilitated retrofit, or facilitated integration in the manufacturing of a wide range of compact headlight assemblies 205.

The motor 103 may be a gimbal motor. It is conceivable that various types of motors 103 may be arranged to connect the mount 102 and the pivot frame 101, such as stepper or servo motors. The motor 103 may be a brushless motor optimized for quick response and instant changes in rotational direction. The compact arrangement realized by the lighting system 100, particularly in the examples where the optical axis 203 is aligned with the pivot axis 105, allows for minimizing the required torque, i.e. the weight that needs to be pulled by the motor 103 for the pivoting motion. This allows the use of a compact gimbal motor 103, which further adds to the compactness of the lighting system 100. The gimbal motor 103 may be optimized for rapid and accurate response within a defined angular interval relevant to the level adjustment of the vehicle 200.

The lighting system 100 may comprise the light emitting device 201, 201'. The light emitting device 201, 201', may be attached to the pivot frame 101 and in electrical communication with the electrical connection interface 108 via an electrical connector attached to the pivot frame 101. The light emitting device 201, 201', may be a long-life light source such as a LED, attached to the pivot frame 101, and which may have a permanently connection to the connection interface 108, to be connected to the electrical system 204 of the vehicle 204. This provides for a particular compact and light-weight lighting system 100. It is however conceivable that such light emitting device 201, 201', and its connection interface 108 may be removable attached to the pivot frame 101 to allow for a facilitated exchange to e.g. LED's with different illumination level output. In one example, the light emitting device 201, 201', comprises a light source configured to be connected to a socket of an electrical connector attached to the pivot frame 101, in which case the light emitting device 201, 201', is removably attached to such electrical socket.

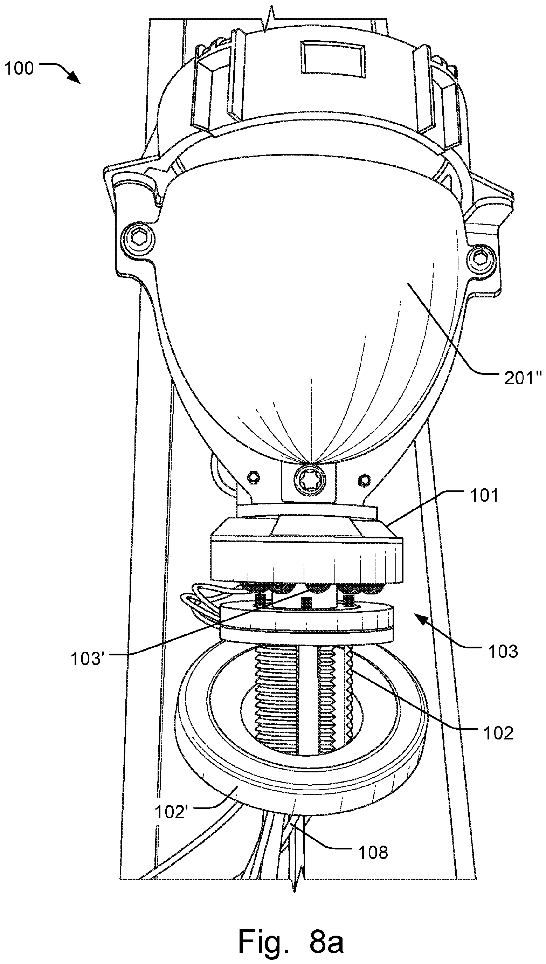

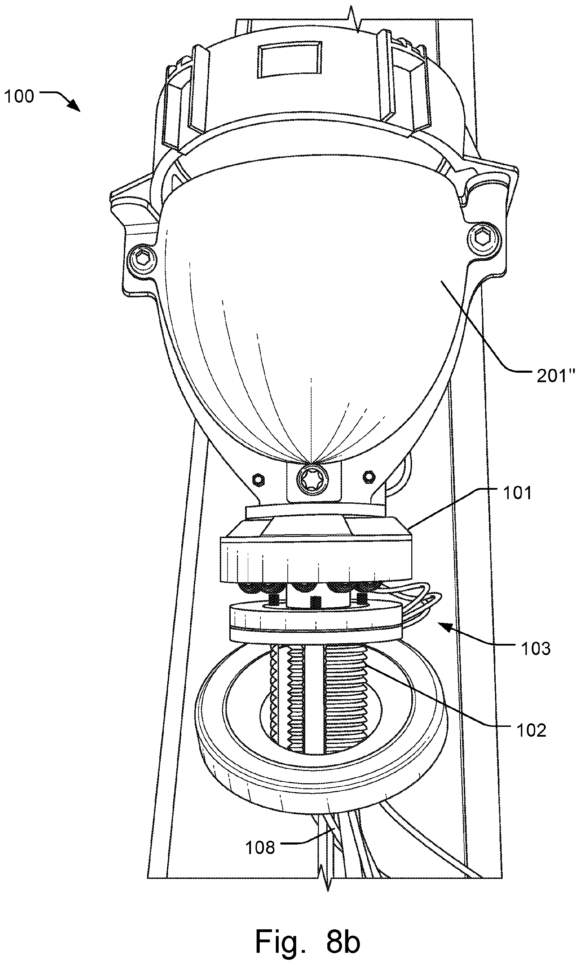

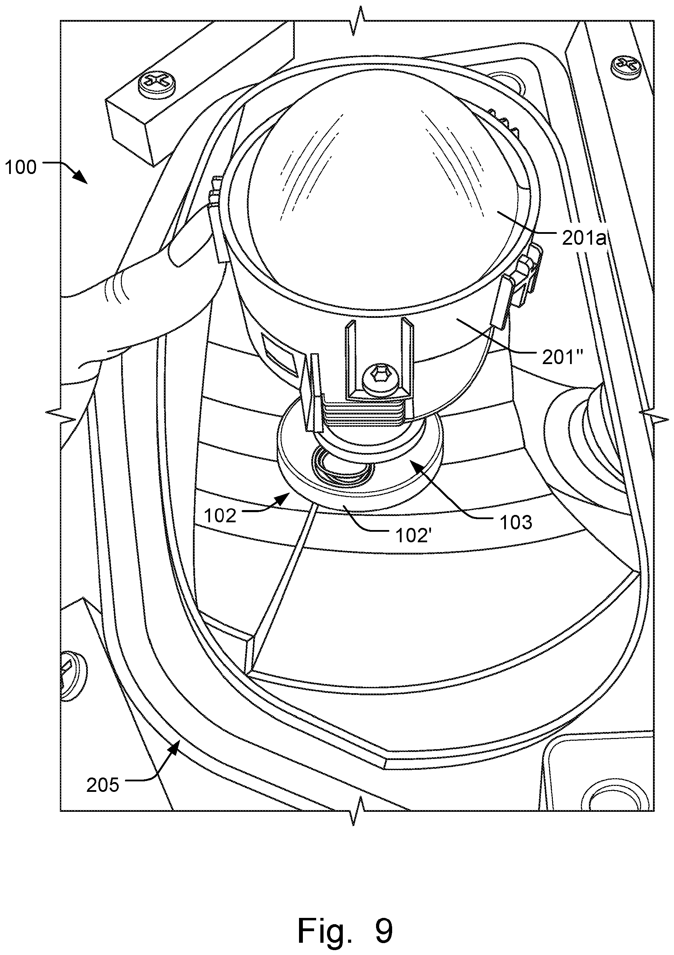

Figs. 8a-b are illustrations of further examples of the lighting system 100. E.g. Fig. 8a shows a mount 102 comprising a threaded rod to be fixed to a corresponding fitting 202 of a vehicle 200. The mount 102 is connected to the motor 103 which is connected at its other side to the pivot frame 101. A rotatable interior 103' of the motor 103 is indicated. The reflector 201" is attached to the pivot frame 101 to allow for rotation of the reflector 201" relative the mount 102. Wires of the electrical connection interface 108 are arranged through the mount 102, i.e. in the interior of the rod. The compact arrangement of the mount 102, motor 103 and pivot frame 101 provides for a facilitated mounting of the lighting system 100 to a wide range of existing headlight assemblies. The mount 102 may be varied to fit a plurality of different motorcycles 200. Fig. 8b shows another view of the lighting system 100, where the reflector 201" has been rotated slightly relative the mount 102, compared to the illustration in Fig. 8a. Although element 201" is referred to as a reflector or light reflective device 201" it is to be understood that various outside housing components may be arranged to enclose the actual light directing elements of the light reflective device 201". Figs. 8a-b, and Fig. 9 show examples of such housing components. The illustration in Fig. 9 shows an example of a housing of a headlight assembly 205 in which the lighting system 100 may be mounted. The mount 102 may comprise a plate 102' arranged to facilitate a secure fit of the lighting system 100. As mentioned above, the light reflective device 201" may comprise any reflective or optical components to direct the light from the light emitting element 201, 201', to the road surface with a desired illumination pattern. The light reflective device 201" may e.g. comprise a lens or light projecting element 201a, as illustrated in the view in Fig. 9, which accordingly is rotated relative the mount 102 as described above.

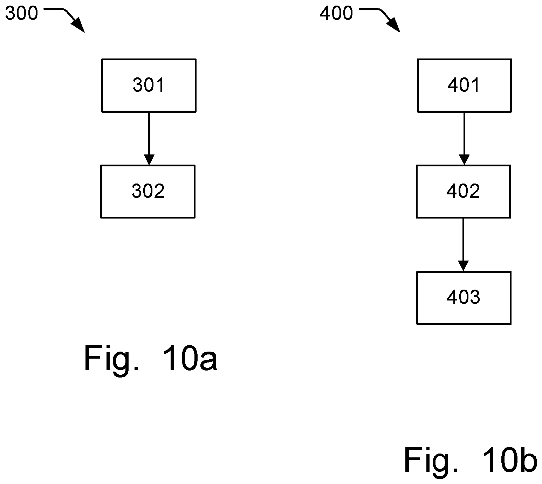

Fig. 10a is a flowchart of a method 300 of lighting control in a lighting system 100 for a leaning vehicle 200. The lighting system 100 comprises a pivot frame 101 configured to be fixed to a light emitting and to a light reflective devices 201, 201", a mount 102 configured to be fixed to a light fitting 202 of a leaning vehicle 200, and a motor 103 attached to the pivot frame 101 and the mount 102. The motor 102 is configured to provide rotational movement of the pivot frame 101 relative to the mount 102, as explained above. The method 300 comprises receiving 301 sensor data of a leaning angle (v) of the leaning vehicle 200, and rotating 302 the pivot frame 101 to a desired angle (v') relative to the mount 101 based on the leaning angle (v). The method 300 thus provides for the advantageous benefits as described above for the lighting system 100 and Figs. 1, 2a, 2b, 3a, 5b, 6-9.

Fig. 10b is a flowchart of a method 400 of providing lighting for a leaning vehicle 200. The method 400 comprises providing 401 a lighting system 100 comprising a pivot frame 101 configured to be fixed to a light emitting and to a light reflective devices 201,201", a mount 102 configured to be fixed to a light fitting 202 of a leaning vehicle 200, and a motor 103 attached to the pivot frame 101 and the mount 102. The motor 103 is configured to provide rotational movement of the pivot frame 101 relative to the mount 102. securing 402 the mount to a light fitting 202 of the leaning vehicle 200. The method 400 comprises connecting 403 an electrical connection interface 108, in communication with a controller 104 and/or in communication with the light emitting device 201, 201', to an electrical system 204 of the leaning vehicle 200. The controller 104 is configured to control the motor 103 to rotate the pivot frame 101 to a desired angle (v') relative to the mount 102 based on sensor data of a leaning angle (v) of the leaning vehicle 200.

## Claims

1. A lighting system (100) for a leaning vehicle (200), comprising:
a pivot frame (101) configured to be fixed to a light emitting device (201) and to a light reflective device (201"),
a mount (102) configured to be fixed to a light fitting (202) of a leaning vehicle,
a motor (103) attached to the pivot frame (101) and the mount (102), wherein the motor is configured to provide rotational movement of the pivot frame (101) relative to the mount (102) around a rotational axis of the motor, whereby the rotational axis is a pivot axis (105) being concentric with an optical axis (203) of the light emitting device (201), and
a controller (104) in electrical communication with the motor (103) and being configured to receive sensor data of a leaning angle (v) of the leaning vehicle (200), and
wherein the controller (104) is configured to control the motor (103) to rotate the pivot frame (101) to a desired angle (v') relative to the mount (102) based on the leaning angle,
whereby the light emitting device (201) and the light reflective device (201") are rotatable by the motor (103) relative the mount (102), **characterized in that** the motor (103) is concentrically arranged with respect to the pivot frame (101), and
wherein the pivot frame and the mount are connected at opposite sides of the motor and the mount comprising a connecting element configured for removably attaching the lighting system to a corresponding light fitting of an existing headlight assembly (205) of the leaning vehicle.

2. Lighting system according to claim 1, comprising a sensor (106) configured to detect said leaning angle of the leaning vehicle and send said sensor data to the controller.

3. Lighting system according to claim 2, wherein the sensor is attached to the pivot frame.

4. Lighting system according to claim 2, wherein the sensor is attached to the mount.

5. Lighting system according to any of claims 1 - 4, comprising an electrical connection interface (108) configured to connect to an electrical system (204) of the leaning vehicle for communication between the electrical system and the controller to receive said sensor data, and/or for communication between the electrical system and the light emitting device (201, 201').

6. Lighting system according to any of claims 1 - 5, wherein the motor is concentrically arranged with respect to the pivot frame, and
wherein a width (w₁) of the motor, in a direction perpendicular to a pivot axis (105) of the pivot frame is at the most 50% wider than a width (w₂) of the pivot frame and/or a light emitting device connected to the pivot frame.

7. Lighting system according to any of claims 1 - 6, wherein the motor is concentrically arranged with respect to the pivot frame, and
wherein a width (w₁) of the motor, in a direction perpendicular to a pivot axis (105) of the pivot frame, corresponds essentially to, or is less than, a width (w₂) of the pivot frame and/or a light emitting device connected to the pivot frame.

8. Lighting system according to any of claims 1 - 7, wherein the motor is a gimbal motor.

9. Lighting system according to any of claims 1 - 8, comprising said light emitting device, wherein the light emitting device comprises a light source, such as a LED or HID light source, attached to the pivot frame.

10. Lighting system according to any of claims 1 - 9, wherein the controller is configured to determine the desired angle (v') as a function of the leaning angle (v) and motion characteristics of the leaning vehicle.

11. Lighting system according to any of claims 1 - 10, wherein the controller is configured to control a power output to the light emitting device based on the leaning angle.

12. A method (300) of lighting control in a lighting system (100) for a leaning vehicle comprising a pivot frame (101) configured to be fixed to a light emitting device (201) and to a light reflective device (201"), a mount (102) configured to be fixed to a light fitting (202) of a leaning vehicle, and a motor (103) attached to the pivot frame (101) and the mount (102) and being configured to provide rotational movement of the pivot frame (101) relative to the mount (102) around a rotational axis of the motor (103), whereby the rotational axis is a pivot axis (105) being concentric with an optical axis (203) of the light emitting device (201),
whereby the light emitting device (201) and the light reflective device (201") are rotatable by the motor (103) relative the mount (101), the method comprising
receiving (301) sensor data of a leaning angle (v) of the leaning vehicle,
rotating (302) the pivot frame (101) to a desired angle relative to the mount (102) based on the leaning angle, **characterized in that** the motor (103) is concentrically arranged with respect to the pivot frame (101) and wherein the pivot frame and the mount are connected at opposite sides of the motor and the mount comprising a connecting element configured for removably attaching the lighting system to a corresponding light fitting of a headlight assembly (205) of the leaning vehicle.

13. A method (400) of providing lighting for a leaning vehicle, the method comprising:
providing (401) a lighting system (100) comprising a pivot frame (101) configured to be fixed to a light emitting device (201, 201') and to a light reflective device (201"), a mount (102) configured to be fixed to a light fitting (202) of a leaning vehicle, and a motor (103) attached to the pivot frame (101) and the mount (102) and being configured to provide rotational movement of the pivot frame (101) relative to the mount (102) around a rotational axis of the motor (103), whereby the rotational axis is a pivot axis (105) being concentric with an optical axis (203) of the light emitting device (201),
whereby the light emitting device (201) and the light reflective device (201") are rotatable by the motor (103) relative the mount (102), the method comprising
securing (402) the mount (102) to a light fitting (202) of the leaning vehicle,
connecting (403) an electrical connection interface (108), in communication with a controller (104) and/or in communication with the light emitting device (201), to an electrical system (204) of the leaning vehicle, wherein the controller (104) is configured to control the motor (103) to rotate the pivot frame (101) to a desired angle relative to the mount (102) based on sensor data of a leaning angle (v) of the leaning vehicle, **characterized in that** the motor (103) is concentrically arranged with respect to the pivot frame (101), and
wherein the pivot frame and the mount are connected at opposite sides of the motor and the mount comprising a connecting element configured for removably attaching the lighting system to a corresponding light fitting of an existing headlight assembly (205) of the leaning vehicle.

## Patentansprüche

1. Beleuchtungssystem (100) für ein Neigefahrzeug (200), umfassend:
einen Schwenkrahmen (101), der ausgestaltet ist, um an einer Licht emittierenden Vorrichtung (201) und einer Licht reflektierenden Vorrichtung (201") fixiert zu werden,
eine Halterung (102), die ausgestaltet ist, um an einem Leuchtenhalter (202) eines Neigefahrzeugs fixiert zu werden,
einen Motor (103), der an dem Schwenkrahmen (101) und der Halterung (102) befestigt ist, wobei der Motor ausgestaltet ist, um Rotationsbewegung des Schwenkrahmens (101) relativ zu der Halterung (102) um eine Rotationsachse des Motors bereitzustellen, wobei die Rotationsachse eine Schwenkachse (105) ist, die mit einer optischen Achse (203) der Licht emittierenden Vorrichtung (201) konzentrisch ist, und
eine Steuerung (104) in elektrischer Kommunikation mit dem Motor (103), und die ausgestaltet ist, um Sensordaten eines Neigewinkels (v) des Neigefahrzeugs (200) zu empfangen, und
wobei die Steuerung (104) ausgestaltet ist, um den Motor (103) zu steuern, um den Schwenkrahmen (101) basierend auf dem Neigewinkel auf einen gewünschten Winkel (v') relativ zu der Halterung (102) zu rotieren,
wobei die Licht emittierende Vorrichtung (201) und die Licht reflektierende Vorrichtung (201") durch den Motor (103) relativ zu der Halterung (102) rotierbar sind,
**dadurch gekennzeichnet, dass** der Motor (103) in Bezug auf den Schwenkrahmen (101) konzentrisch angeordnet ist, und
wobei der Schwenkrahmen und die Halterung an entgegengesetzten Seiten des Motors verbunden sind und die Halterung ein Verbindungselement umfasst, das zur entfernbaren Befestigung des Beleuchtungssystems an einem entsprechenden Leuchtenhalter einer vorhandenen Scheinwerferbaugruppe (205) des Neigefahrzeugs ausgestaltet ist.

2. Beleuchtungssystem nach Anspruch 1, umfassend einen Sensor (106), der ausgestaltet ist, um den Neigewinkel des Neigefahrzeugs zu detektieren und die Sensordaten an die Steuerung zu senden.

3. Beleuchtungssystem nach Anspruch 2, wobei der Sensor an dem Schwenkrahmen befestigt ist.

4. Beleuchtungssystem nach Anspruch 2, wobei der Sensor an der Halterung befestigt ist.

5. Beleuchtungssystem nach einem der Ansprüche 1 bis 4, umfassend eine elektrische Verbindungsschnittstelle (108), die ausgestaltet ist, um mit einem elektrischen System (204) des Neigefahrzeugs zur Kommunikation zwischen dem elektrischen System und der Steuerung, um die Sensordaten zu empfangen, und/oder zur Kommunikation zwischen dem elektrischen System und der Licht emittierenden Vorrichtung (201, 201') verbunden zu werden.

6. Beleuchtungssystem nach einem der Ansprüche 1 bis 5, wobei der Motor in Bezug zu dem Schwenkrahmen konzentrisch angeordnet ist, und
wobei eine Breite (w₁) des Motors in einer Richtung rechtwinklig zu einer Schwenkachse (105) des Schwenkrahmens höchstens 50 % breiter als eine Breite (w₂) des Schwenkrahmens und/oder einer Licht emittierenden Vorrichtung, die mit dem Schwenkrahmen verbunden ist, ist.

7. Beleuchtungssystem nach einem der Ansprüche 1 bis 6, wobei der Motor in Bezug zu dem Schwenkrahmen konzentrisch angeordnet ist, und
wobei eine Breite (w₁) des Motors in einer Richtung rechtwinklig zu einer Schwenkachse (105) des Schwenkrahmens im Wesentlichen einer Breite (w₂) des Schwenkrahmens und/oder einer Licht emittierenden Vorrichtung, die mit dem Schwenkrahmen verbunden ist, entspricht oder kleiner als diese ist.

8. Beleuchtungssystem nach einem der Ansprüche 1 bis 7, wobei der Motor ein Gimbalmotor ist.

9. Beleuchtungssystem nach einem der Ansprüche 1 bis 8, umfassend die Licht emittierende Vorrichtung, wobei die Licht emittierende Vorrichtung eine Lichtquelle umfasst, wie eine LED- oder HID-Lichtquelle, die an dem Schwenkrahmen befestigt ist.

10. Beleuchtungssystem nach einem der Ansprüche 1 bis 9, wobei die Steuerung ausgestaltet ist, um den gewünschten Winkel (v') als Funktion des Neigewinkels (v) und der Bewegungscharakteristika des Neigefahrzeugs zu bestimmen.

11. Beleuchtungssystem nach einem der Ansprüche 1 bis 10, wobei die Steuerung ausgestaltet ist, um eine Leistungsausgabe an die Licht emittierende Vorrichtung basierend auf dem Neigewinkel zu steuern.

12. Verfahren (300) zur Beleuchtungssteuerung in einem Beleuchtungssystem (100) für ein Neigefahrzeug, umfassend einen Schwenkrahmen (101), der ausgestaltet ist, um an einer Licht emittierenden Vorrichtung (201) und an einer Licht reflektierenden Vorrichtung (201") fixiert zu werden, eine Halterung (102), die ausgestaltet ist, um an einem Leuchtenhalter (202) eines Neigefahrzeugs fixiert zu werden, und einen Motor (103), der an dem Schwenkrahmen (101) und der Halterung (102) befestigt ist und ausgestaltet ist, um Rotationsbewegung des Schwenkrahmens (101) relativ zu der Halterung (102) um eine Rotationsachse des Motors (103) bereitzustellen, wobei die Rotationsachse eine Schwenkachse (105) ist, die konzentrisch mit einer optischen Achse (203) der Licht emittierenden Vorrichtung (201) ist,
wobei die Licht emittierende Vorrichtung (201) und die Licht reflektierende Vorrichtung (201") durch den Motor (103) relativ zu der Halterung (101) rotierbar sind, wobei das Verfahren umfasst:
Empfangen (301) von Sensordaten eines Neigewinkels (v) des Neigefahrzeugs,
Rotieren (302) des Schwenkrahmens (101) zu einem gewünschten Winkel relativ zu der Halterung basierend auf dem Neigewinkel, **dadurch gekennzeichnet, dass** der Motor (103) in Bezug zu dem Schwenkrahmen (101) konzentrisch angeordnet ist, und wobei der Schwenkrahmen und die Halterung an entgegengesetzten Seiten des Motors verbunden sind und die Halterung ein Verbindungselement umfasst, das zum entfernbaren Befestigen des Beleuchtungssystems an einem entsprechenden Leuchtenhalter einer Scheinwerferbaugruppe (205) des Neigefahrzeugs ausgestaltet ist.

13. Verfahren (400) zum Bereitstellen von Beleuchtung für ein Neigefahrzeug, wobei das Verfahren umfasst:
Bereitstellen (401) eines Beleuchtungssystems (100), umfassend einen Schwenkrahmen (101), der ausgestaltet ist, um an einer Licht emittierenden Vorrichtung (201, 201') und an einer Licht reflektierenden Vorrichtung (201") fixiert zu werden, eine Halterung (102), die ausgestaltet ist, um an einem Leuchtenhalter (202) eines Neigefahrzeugs fixiert zu werden, und einen Motor (103), der an dem Schwenkrahmen (101) und der Halterung (102) befestigt ist und ausgestaltet ist, um Rotationsbewegung des Schwenkrahmens (101) relativ zu der Halterung (102) um eine Rotationsachse des Motors (103) bereitzustellen, wobei die Rotationsachse eine Schwenkachse (105) ist, die konzentrisch mit einer optischen Achse (203) der Licht emittierenden Vorrichtung (201) ist,
wobei die Licht emittierende Vorrichtung (201) und die Licht reflektierende Vorrichtung (201") durch den Motor (103) relativ zu der Halterung (102) rotierbar sind, wobei das Verfahren umfasst:
Sichern (402) der Halterung (102) an einem Leuchtenhalter (202) des Neigefahrzeugs,
Verbinden (403) einer elektrischen Verbindungsschnittstelle (108) in Kommunikation mit einer Steuerung (104) und/oder in Kommunikation mit der Licht emittierenden Vorrichtung (201) mit einem elektrischen System (204) des Neigefahrzeugs, wobei die Steuerung (104) ausgestaltet ist, um den Motor (103) zu steuern, um den Schwenkrahmen (101) basierend auf Sensordaten eines Neigewinkels (v) des Neigefahrzeugs zu einem gewünschten Winkel relativ zu der Halterung (102) zu rotieren, **dadurch gekennzeichnet, dass** der Motor (103) konzentrisch in Bezug zu dem Schwenkrahmen (101) angeordnet ist, und
wobei der Schwenkrahmen und die Halterung an entgegengesetzten Seiten des Motors verbunden sind und die Halterung ein Verbindungselement umfasst, das zur entfernbaren Befestigung des Beleuchtungssystems an einem entsprechenden Leuchtenhalter einer vorhandenen Scheinwerferbaugruppe (205) des Neigefahrzeugs ausgestaltet ist.

## Revendications

1. Système d'éclairage (100) pour un véhicule s'inclinant (200), comprenant :
un cadre pivotant (101) configuré pour être fixé à un dispositif électroluminescent (201) et à un dispositif réfléchissant la lumière (201"),
un support (102) configuré pour être fixé à un accessoire lumineux (202) d'un véhicule s'inclinant,
un moteur (103) fixé au cadre pivotant (101) et au support (102), dans lequel le moteur est configuré pour fournir un mouvement de rotation du cadre pivotant (101) par rapport au support (102) autour d'un axe de rotation du moteur, moyennant quoi l'axe de rotation est un axe de pivot (105) concentrique avec un axe optique (203) du dispositif électroluminescent (201), et
un dispositif de commande (104) en communication électrique avec le moteur (103) et configuré pour recevoir des données de capteur d'un angle d'inclinaison (v) du véhicule s'inclinant (200), et
dans lequel le dispositif de commande (104) est configuré pour commander le moteur (103) pour faire tourner le cadre pivotant (101) selon un angle souhaité (v') par rapport au support (102) sur la base de l'angle d'inclinaison,
moyennant quoi le dispositif électroluminescent (201) et le dispositif réflecteur de lumière (201") peuvent être tournés par le moteur (103) par rapport au support (102), **caractérisé en ce que** le moteur (103) est agencé de manière concentrique par rapport au cadre pivotant (101), et
dans lequel le cadre pivotant et le support sont reliés au niveau de côtés opposés du moteur et du support comprenant un élément de liaison configuré pour fixer de manière amovible le système d'éclairage à un accessoire lumineux correspondant d'un ensemble de phares (205) existant du véhicule s'inclinant.

2. Système d'éclairage selon la revendication 1, comprenant un capteur (106) configuré pour détecter ledit angle d'inclinaison du véhicule s'inclinant et envoyer lesdites données de capteur au dispositif de commande.

3. Système d'éclairage selon la revendication 2, dans lequel le capteur est fixé au cadre pivotant.

4. Système d'éclairage selon la revendication 2, dans lequel le capteur est fixé au support.

5. Système d'éclairage selon l'une quelconque des revendications 1 à 4, comprenant une interface de connexion électrique (108) configurée pour se connecter à un système électrique (204) du véhicule s'inclinant pour une communication entre le système électrique et le dispositif de commande pour recevoir lesdites données de capteur, et/ou pour une communication entre le système électrique et le dispositif électroluminescent (201, 201') .

6. Système d'éclairage selon l'une quelconque des revendications 1 à 5, dans lequel le moteur est agencé de manière concentrique par rapport au cadre pivotant, et
dans lequel une largeur (w₁) du moteur, dans une direction perpendiculaire à un axe de pivot (105) du cadre pivotant, est au plus 50 % plus large qu'une largeur (w₂) du cadre pivotant et/ou d'un dispositif électroluminescent connecté au cadre pivotant.

7. Système d'éclairage selon l'une quelconque des revendications 1 à 6, dans lequel le moteur est agencé de manière concentrique par rapport au cadre pivotant, et
dans lequel une largeur (w₁) du moteur, dans une direction perpendiculaire à un axe de pivot (105) du cadre de pivotement, correspond essentiellement à, ou est inférieure à, une largeur (w₂) du cadre de pivotement et/ou d'un dispositif électroluminescent relié au cadre de pivotement.

8. Système d'éclairage selon l'une quelconque des revendications 1 à 7, dans lequel le moteur est un moteur à cardan.

9. Système d'éclairage selon l'une quelconque des revendications 1 à 8, comprenant ledit dispositif électroluminescent, dans lequel le dispositif électroluminescent comprend une source de lumière, telle qu'une source de lumière DEL ou DHI, fixée au cadre pivotant.

10. Système d'éclairage selon l'une quelconque des revendications 1 à 9, dans lequel le dispositif de commande est configuré pour déterminer l'angle souhaité (v') en fonction de l'angle d'inclinaison (v) et de caractéristiques de mouvement du véhicule s'inclinant.

11. Système d'éclairage selon l'une quelconque des revendications 1 à 10, dans lequel le dispositif de commande est configuré pour commander une sortie de puissance vers le dispositif électroluminescent en fonction de l'angle d'inclinaison.

12. Procédé (300) de commande d'éclairage dans un système d'éclairage (100) pour un véhicule s'inclinant comprenant un cadre pivotant (101) configuré pour être fixé à un dispositif électroluminescent (201) et à un dispositif réfléchissant la lumière (201"), un support (102) configuré pour être fixé à un accessoire lumineux (202) d'un véhicule s'inclinant, et un moteur (103) fixé au cadre pivotant et au support (102) et configuré pour fournir un mouvement de rotation du cadre pivotant (101) par rapport au support (102) autour d'un axe de rotation du moteur (103), moyennant quoi l'axe de rotation est un axe de pivot (105) concentrique avec un axe optique (203) du dispositif électroluminescent (201),
moyennant quoi le dispositif électroluminescent (201) et le dispositif réfléchissant la lumière (201") peuvent être tournés par le moteur (103) par rapport au support (101), le procédé comprenant
la réception (301) de données de capteur d'un angle d'inclinaison (v) du véhicule s'inclinant,
la rotation (302) du cadre pivotant (101) selon un angle souhaité par rapport au support (102) sur la base de l'angle d'inclinaison, **caractérisé en ce que** le moteur (103) est agencé de manière concentrique par rapport au cadre pivotant (101) et dans lequel le cadre pivotant et le support sont reliés au niveau de côtés opposés du moteur et du support comprenant un élément de liaison configuré pour fixer de manière amovible le système d'éclairage à un accessoire lumineux correspondant d'un ensemble de phares (205) du véhicule s'inclinant.

13. Procédé (400) de fourniture d'un éclairage pour un véhicule s'inclinant, le procédé comprenant :
la fourniture (401) d'un système d'éclairage (100) comprenant un cadre pivotant (101) configuré pour être fixé à un dispositif électroluminescent (201, 201') et à un dispositif réfléchissant la lumière (201"), un support (102) configuré pour être fixé à un accessoire lumineux (202) d'un véhicule s'inclinant, et un moteur (103) fixé au cadre pivotant (101) et au support (102) et configuré pour fournir un mouvement de rotation du cadre pivotant (101) par rapport au support (102) autour d'un axe de rotation du moteur (103), moyennant quoi l'axe de rotation est un axe de pivot (105) concentrique avec un axe optique (203) du dispositif électroluminescent (201),
moyennant quoi le dispositif électroluminescent (201) et le dispositif réfléchissant la lumière (201") peuvent être tournés par le moteur (103) par rapport au support (102), le procédé comprenant
la solidarisation (402) du support (102) avec un accessoire lumineux (202) du véhicule s'inclinant,
la connexion (403) d'une interface de connexion électrique (108), en communication avec un dispositif de commande (104) et/ou en communication avec le dispositif électroluminescent (201), à un système électrique (204) du véhicule s'inclinant, dans lequel le dispositif de commande (104) est configuré pour commander le moteur (103) pour faire tourner le cadre pivotant (101) selon un angle souhaité par rapport au support (102) sur la base de données de capteur d'un angle d'inclinaison (v) du véhicule s'inclinant, **caractérisé en ce que** le moteur (103) est agencé de manière concentrique par rapport au cadre pivotant (101), et
dans lequel le cadre pivotant et le support sont reliés au niveau de côtés opposés du moteur et du support comprenant un élément de liaison configuré pour fixer de manière amovible le système d'éclairage à un accessoire lumineux correspondant d'un ensemble de phares (205) existant du véhicule s'inclinant.
